# EUROPÄISCHE PATENTSCHRIFT

(11) **EP 2 189 675 B1**
(45) Veröffentlichungstag und Bekanntmachung des Hinweises auf die Patenterteilung: **02.05.2012**
(21) Anmeldenummer: 08020461.3
(22) Anmeldetag: 25.11.2008
(51) Int. Cl.: F16D 3/04

(54) **Wellenkupplung**
Shaft coupling
Accouplement d'arbre

(43) Veröffentlichungstag der Anmeldung: 26.05.2010
(73) Patentinhaber: Siemens Aktiengesellschaft, 80333 München (DE)
(72) Erfinder: Braun, Matthias, 97711 Weichtungen (DE); Zisler, Michael, 97717 Euerdorf-Wirmsthal (DE)

(56) Entgegenhaltungen:
- EP-A- 1 452 759
- JP-A- 2 021 029
- US-A- 1 350 011
- US-A- 1 887 081

## Beschreibung

Die Erfindung betrifft eine Wellenkupplung zur Ankopplung eines Gebers, der eine Geberwelle aufweist, an eine elektrische Maschine, insbesondere einen Elektromotor, die eine Maschinenwelle aufweist.

Beim Einsatz von elektrischen Maschinen mit rotierenden Wellen ist es oft erwünscht eine Drehzahl einer Welle oder eine Lage eines Rotors zu erfassen. In der Regel sind Motoren daher mit einem Winkelmesssystem ausgestattet. Mit diesem Winkelmesssystem kann ein Umrichter eine Winkellage eines Motorläufers zum Motorständer bestimmen und/oder einen Drehzahlistwert für eine Drehzahlregelung ermitteln.

Die mechanische Kopplung eines Winkelgebers an den Motor erfolgt z.B. mit einer Wellenkupplung oder einer Drehmomentstütze. Diese Kupplungen müssen auf der einen Seite möglichst drehsteif sein, d.h. eine hohe Torsionskonstante bzw. ein hohes Torsionsmoment aufweisen, auf der anderen Seite jedoch möglichst geringe Querkräfte weitergeben, da ansonsten die Lager der Maschinenwelle und insbesondere die Lager der Geberwelle belastet werden und es dort zu einem Verschleiß kommt. Querkräfte auf den Lagern werden beispielsweise durch mechanischen Versatz der zu kuppelnden Achsen erzeugt. Hierbei wird zwischen Radialversatz und Winkelversatz unterschieden.

Bei den heute verwendeten Wellenkupplungen werden verschiedene Kupplungsarten verwendet. All diesen Kupplungsprinzipen ist gemein, dass bei einer Optimierung der Wellenkupplung auf ein hohes Torsionsmoment bzw. eine höhere Torsionskonstante immer auch die unerwünschte Übertragung der Querkräfte bei mechanischem Versatz der Symmetrieachsen größer wird.

Nach dem Stand der Technik werden die Wellenkupplungen in der Regel so ausgelegt, dass die Torsionskonstante die für die Anwendung notwendige Größe erreicht und die Auswirkungen der sich dabei einstellenden hohen Querkräfte bzw. Biegemomente in Kauf genommen werden.

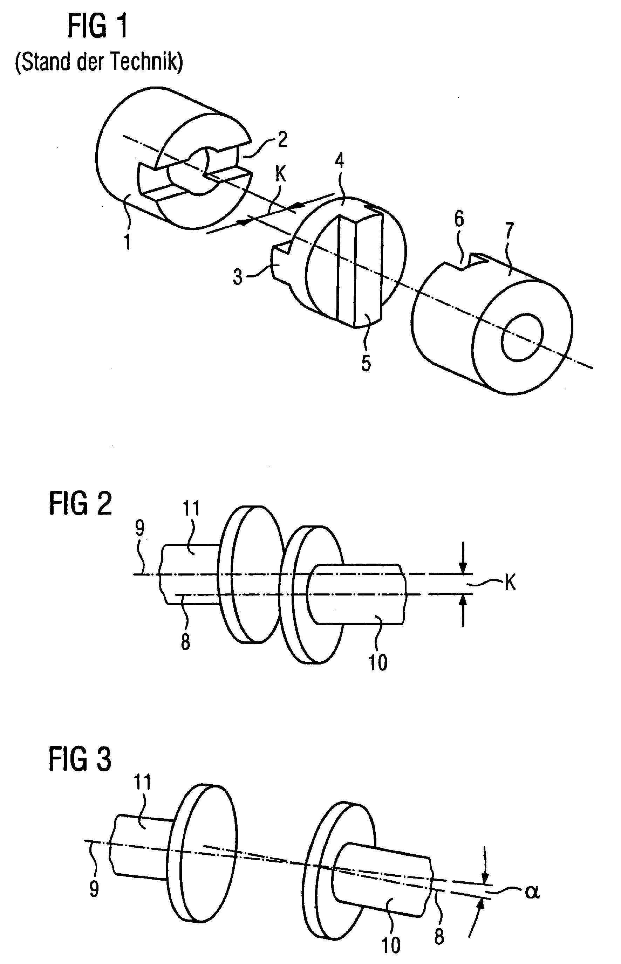

Aus der EP 1 452 759 A1 ist eine Wellenkupplung bekannt, die eine Maschinenwelle mit einer Geberwelle verbindet. Der offenbarten Wellenkupplung liegt das Prinzip der Oldham-Kupplung (Kreuzschiebekupplung) zugrunde. Figur 1 illustriert den schematischen Aufbau einer Oldham-Kupplung. Bei der Oldham-Kupplung wird ein Radialversatz der Welle durch Gleitbewegung des Drehmomentübertragungselementes kompensiert und somit werden die Querkräfte minimiert.

Bei der EP 1 452 759 A1 wird die Geberwelle über ein Drehmomentübertragungselement mit der Maschinenwelle verbunden. Hierbei weist die Passung des Drehmomentübertragungselementes zum Geberwellenendstück und dem Maschinenwellenendstück ein Spiel auf, so dass die Klauen des Geberwellenendstücks und des Maschinenwellenendstücks im Drehmomentübertragungselement gleiten können. Liegt nun ein radialer Versatz der Achsen vor, so werden durch Gleitbewegung des Drehmomentübertragungselementes die Querkräfte auf den Lagern kompensiert und somit minimiert.

Aus der US 1 887 081 A1 ist eine Wellenkupplung zur Übertragung eines Drehmoments bekannt. Die Wellenkupplung weist hierbei jeweils ein Wellenendstück sowie ein Drehmomentübertragungselement auf. Die Wellenkupplung sollte unter anderem dazu geeignet sein einen radial- sowie Winkelversatz der Wellen zueinander zu kompensieren.

Aus der JP 02-021029 A ist ein Drehmomentübertragungselement bekannt. Aufgabe dieses Drehmomentübertragungselementes ist es die Dicke des Drehmomentübertragungselementes zu minimieren sowie das Übertragen von Motorvibrationen zu verhindern. Aus der US 1 350 011 A ist ein Drehmomentübertragungselement bekannt. Aufgabe dieses Drehmomentübertragungselementes ist es schwere Drehmomente ohne Einsatz von Öl oder Schmiermitteln zu übertragen.

Der Erfindung liegt die Aufgabe zugrunde, eine Wellenkupplung zu schaffen, die einen möglichst verschleißarmen Betrieb gewährt.

Die Lösung der gestellten Aufgabe gelingt durch eine Wellenkupplung zur Ankopplung eines Gebers, der eine Geberwelle aufweist, an eine elektrische Maschine, die eine Maschinenwelle aufweist, wobei die Wellenkupplung umfasst:
- ein mit der Geberwelle koppelbares Geberwellenendstück,
- ein mit der Maschinenwelle koppelbares Maschinenwellenendstück und
- ein Drehmomentübertragungselement zur Kopplung des Geberwellenendstücks mit dem Maschinenwellenendstück,
wobei das Drehmomentübertragungselement eine Rahmenelement und an der Innenseite angebrachte stegförmige Abstützelemente aufweist, wobei die stegförmigen Abstützelemente im zusammengebauten Zustand derartige Kontaktstellen des Geberwellenendstückes und/oder des Maschinenwellenendstückes mit dem Drehmomentübertragungselement aufweisen, wobei ein durch das Geberelementendstück und/oder Maschinenwellenendstück hervorgerufener Torsionskraftvektor, der durch ein von der Maschinenwelle an die Geberwelle zu übertragendes Torsionsmoment erzeugt wird, an jeder der besagten Kontaktstellen im Wesentlichen parallel zur Längsachse des zugehörigen stegförmigen Abstützelementes wirkt.

Ferner wird die Aufgabe gelöst, durch ein Herstellungsverfahren zur Ankopplung eines Gebers, der eine Geberwelle aufweist, an eine elektrische Maschine, die eine Maschinenwelle aufweist, mit folgenden Verfahrensschritten:
- Kopplung eines Geberwellenendstückes mit der Geberwelle,
- Kopplung eines Maschinenwellenendstückes mit der Maschinenwelle,
- Koppeln des Geberwellenendstückes und des Maschinenwellenendstückes mit einem Drehmomentübertragungselement welches ein Rahmenelement und an der Innenseite angebrachte stegförmige Abstützelemente aufweist, wobei die stegförmigen Abstützelemente nach dem Koppeln derartige Kontaktstellen des Geberwellenendstückes und/oder des Maschinenwellenendstückes mit dem Drehmomentübertragungselement aufweisen, dass ein durch das Geberwellenendstück oder Maschinenwellenendstück hervorgerufener Torsionskraftvektor, der durch ein von der Maschinenwelle an die Geberwelle zu übertragendes Torsionsmoment erzeugt wird, an jeder der besagten Kontaktstellen im Wesentlichen parallel zur Längsachse der zugehörigen stegförmigen Abstützelementes wirkt.

Vorteilhafte Ausführungsformen der Erfindung ergeben sich aus den Unteransprüchen.

Dadurch, dass bei dem Übertragen des Torsionsmomentes, beispielsweise von der Maschinenwelle, der Torsionskraftvektor des Maschinenwellenendstückes an der Kontaktstelle mit dem Drehmomentübertragungselement im Wesentlichen parallel zur Längsachse des zugehörigen stegförmigen Abstützelementes wirkt, erfolgt eine direkte Kraftübertragung über das stegförmige Abstützelement in das Rahmenelement ohne dabei das stegförmige Abstützelement hinsichtlich seiner Querachse stark zu belasten. Somit wird das Torsionsmoment über das stegförmige Abstützelement in das Rahmenelement übertragen und wieder an das stegförmige Abstützelement des entsprechenden Gegenspielers, in diesem Fall das Geberwellendstück der Geberwelle, übertragen. Hierbei erfolgt die Kraftübertragung des stegförmigen Abstützelementes wiederum derart, dass der Torsions-Kraftvektor an der Kontaktstelle zwischen dem besagten stegförmigen Abstützelement mit dem Geberwellenendstück parallel zu der Längsache des stegförmigen Abstützelementes wirkt.

Sofern es zu einem radialen Versatz und/oder Winkelversatz zwischen der Geberwelle und der Maschinenwelle kommt, wird die daraus resultierende Querkraft, die sich bei dem Lager der Geberwelle bzw. bei dem Lager der Maschinenwelle niederschlagen würde, durch Deformation des stegförmigen Abstützelementes ausgeglichen. Die Deformation am stegförmigen Abstützelement findet vorteilhafterweise im elastischen Bereich des Materials des stegförmigen Abstützelementes statt.

Das stegförmige Abstützelement kann sich auf Grund seiner geometrischen Form leichter in die Querrichtung verbiegen und somit leichter auftretende Querkräfte kompensieren.

Auf diese Weise werden die Lager der Maschinenwelle und insbesondere die Lager der Geberwelle entlastet bzw. geschont. Hierdurch wird eine enorme Verlängerung der Lebensdauer der üblicherweise verschleißanfälligen Lager erreicht.

In beiden Fällen muss das stegförmige Abstützelement in der Längsrichtung möglichst stabil sein, kann jedoch hinsichtlich der Querbelastung, wegen der geringen Querbelastung des Torsionsmomentes, weniger steif ausgelegt werden und kann somit optimal auf die unerwünschten Querkräfte, welche durch einen radialen Versatz und/oder Winkelversatz zwischen der Geberwelle und der Maschinenwelle hervorgerufen werden, dämpfend einwirken. Das Rahmenelement muss hierbei derart ausgelegt werden, dass es das Torsionsmoment bzw. den TorsionskraftVektor, den das entsprechende stegförmige Abstützelement überträgt, aufnehmen und an das entsprechende stegförmige Abstützelement weitergeben kann.

Durch die geometrische Ausprägung des Abstützelementes als Steg wird diese physikalische Eigenschaft bei dem stegförmigen Abstützelement unterstützt. Querkräfte können durch verbiegen kompensiert werden, parallel zur Längsache einwirkende Kräfte können dahingegen sehr stabil und ohne Deformation übertragen werden.

Auf diese Weise kann die Belastbarkeit des besagten Drehmomentübertragungselementes hinsichtlich des zu übertragenden Torsionsmomentes weitgehend unabhängig zu den unerwünschten Querkräften eingestellt werden.

Die Belastbarkeit des Drehmomentübertragungselementes kann hinsichtlich der Torsionskonstante zum Großteil über die Materialbeschaffenheit und über die Dicke des Rahmens eingestellt werden. Dagegen kann die Belastbarkeit des Drehmomentübertragungselementes hinsichtlich der Querkraft und der Biegemomente zum Großteil über die Materialbeschaffenheit und die Dicke des Materials und die Länge der stegförmigen Abstützelemente eingestellt werden. Somit kann durch die erfindungsgemäße Ausgestaltung die Belastbarkeit hinsichtlich der Torsionskonstante weitergehend unabhängig zur Belastbarkeit hinsichtlich auftretender Querkräfte und Biegemomente eingestellt werden.

Letztendlich wird durch die erfindungsgemäße Ausprägung ein Versatz der Maschinenwelle zur Geberwelle im Vergleich zu der Oldham-Kupplung bzw. zu einer starren Wellenkupplung, bei der hierdurch eine Querkraft an ein Lager der Maschinenwelle bzw. Geberwelle und somit ein Verschleiß dieser Partien hervorgerufen wird, durch Verformung der stegförmigen Abstützelemente kompensiert. Auf diese Weise werden die Belastungen der Lager der Maschinenwelle bzw. Geberwelle enorm reduziert und somit eine Verlängerung dieser anfälligen Komponenten erreicht.

Zudem findet durch eine vorzugsweise spielfreie Kopplung des Drehmomentübertragungselementes im Vergleich zur Oldham-Kupplung kein ständiges hin- und her gleiten des Geberwellenendstückes und des Maschinenwellenendstückes bzw. des Drehmomentübertragungselementes statt. Hierdurch wird eine enorme Verlängerung der Lebensdauer der Wellenkupplung erreicht.

Die Verbindung zwischen den stegförmigen Abstützelementen mit dem Rahmen erfolgt vorzugsweise durch Stoffschloss.

In einer Ausführungsform der Erfindung ist das Drehmomentübertragungselement einstückig ausgeführt.

Hierdurch kann eine optimale Kraftübertragung der stegförmigen Abstützelemente in das Rahmenelement erfolgen. Im Falle von Kunststoff kann die Fertigung beispielsweise mittels Spritzguss erfolgen. Zudem kann durch das Spritzgussverfahren eine einfache und kostengünstige Herstellung erzielt werden. Des Weiteren kann die positive Eigenschaft des Kunststoffs im elastischen Bereich ausgenutzt werden.

In einer weiteren Ausführungsform der Erfindung besteht das Rahmenelement aus einem anderen Material als die stegförmigen Abstützelemente.

Da die Torsionskraft vorwiegend im Rahmenelement wirkt und auftretende Querkräfte von den stegförmigen Abstützelementen kompensieret werden, kann mittels der Materialwahl optimal auf die Anforderungen eingegangen werden. Das Rahmenelement kann beispielsweise aus einem steiferen Material bestehen wie die stegförmigen Abstützelemente.

In einer weiteren Ausführungsform der Erfindung stehen erste Längsachsen eines ersten Paars stegförmiger Abstützelemente, die zu einer Kontaktierung mit dem Geberwellenendstück dienen, im Wesentlichen parallel zueinander und liegen vorzugsweise auf einer gemeinsamen Gerade.

Ein Paar stegförmiger Abstützelemente besteht jeweils aus zwei stegförmigen Abstützelementen.

Auf diese Weise kann eine direkte Kraftübertragung des Torsionsmomentes über das Drehmomentübertragungselement in beide Richtungen erfolgen. Zudem kann durch die paarweise Anordnung des stegförmigen Abstützelementes das Geberwellenendstück leichter aufgenommen bzw. kontaktiert werden. Dies kann beispielsweise durch ein Einklemmen zwischen dem ersten Paar stegförmiger Abstützelemente erfolgen.

In einer weiteren Ausführungsform der Erfindung stehen zweite Längsachsen eines zweiten Paars stegförmiger Abstützelemente, die zu einer weiteren Kontaktierung mit dem Geberwellenendstück dienen, im Wesentlichen parallel zueinander und liegen vorzugsweise auf einer gemeinsamen Gerade.

Hierdurch kann eine Kraftverteilung des zu übertragenden Torsionsmomentes auf beide Paare stegförmiger Abstützelemente erfolgen. Die erforderliche Belastbarkeit der einzelnen stegförmigen Abstützelemente sowie die punktuelle Belastbarkeit des Rahmenelementes an den Übergängen zwischen den stegförmigen Abstützelementen und dem Rahmenelement kann somit reduziert werden. Diese Aufteilung der Kräfte spiegelt sich somit in der Dimensionierung der stegförmigen Abstützelemente sowie des Rahmenelementes wieder.

In einer weiteren Ausführungsform der Erfindung stehen die ersten Längsachsen im Wesentlichen parallel zu den zweiten Längsachsen.

Durch diese symmetrische Anordnung kann eine gleichmäßige Kraftverteilung erfolgen. Zudem wird durch die symmetrische Anordnung der stegförmigen Abstützelemente bzw. der Paare stegförmiger Abstützelemente eine vereinfachte Herstellung des Drehmomentübertragungselementes ermöglicht. Außerdem kann hierdurch eine einfache und symmetrische Gestaltung des Geberwellenendstückes erfolgen. Auf diese Weise kann die Kopplung bzw. Montage des Geberwellenendstückes mit dem Drehmomentübertragungselement einfacher erfolgen.

In einer weiteren Ausführungsform der Erfindung stehen dritte Längsachsen eines dritten Paars stegförmiger Abstützelemente, die zu einer Kontaktierung mit dem Maschinenwellenendstück dienen, im Wesentlichen parallel zueinander und liegen vorzugsweise auf einer gemeinsamen Gerade.

Hierdurch ergeben sich dieselben Vorteile wie bei dem ersten Paar stegförmiger Abstützelemente, nur dass es sich hierbei um die Kontaktierung mit dem Maschinenwellenendstück handelt.

In einer weiteren Ausführungsform der Erfindung stehen vierte Längsachsen eines vierten Paars stegförmiger Abstützelemente, die zu einer weiteren Kontaktierung mit dem Maschinenwellenendstück dienen, im Wesentlichen parallel zueinander und liegen vorzugsweise auf einer gemeinsamen Gerade.

Hierdurch ergeben sich dieselben Vorteile wie bei dem ersten und zweiten Paar stegförmiger Abstützelemente, nur dass es sich hierbei um die Kontaktierung mit dem Maschinenwellenendstück handelt.

In einer weiteren Ausführungsform der Erfindung stehen die dritten Längsachsen im Wesentlichen parallel zu den vierten Längsachsen.

Durch diese symmetrische Anordnung kann eine gleichmäßige Kraftverteilung erfolgen. Zudem wird durch die symmetrische Anordnung der stegförmigen Abstützelemente bzw. der Paare stegförmiger Abstützelemente eine vereinfachte Herstellung des Drehmomentübertragungselementes ermöglicht. Außerdem kann hierdurch eine einfache und symmetrische Gestaltung des Maschinenwellenendstückes erfolgen. Auf diese Weise kann die Kopplung des Maschinenwellenendstückes mit dem Drehmomentübertragungselement einfacher erfolgen.

In einer weiteren Ausführungsform der Erfindung stehen die ersten Längsachsen im Wesentlichen senkrecht zu den dritten Längsachsen.

Hierdurch kann eine optimale Kraftübertragung des Torsionsmomentes von dem dritten Paar stegförmiger Abstützelemente über das Rahmenelement an das erste Paar stegförmiger Abstützelemente erfolgen.

Vorteilhafter Weise weist das Drehmomentübertragungselement ein erstes Paar, ein zweites Paar, ein drittes Paar und ein viertes Paar stegförmiger Abstützelemente auf. Durch eine diametrale Anordnung der stegförmigen Abstützelemente kann somit eine vereinfachte Herstellung des Drehmomentübertragungselementes ermöglicht werden. Außerdem kann hierdurch eine einfache und symmetrische Gestaltung des Maschinenwellenendstückes bzw. Geberwellenendstückes erfolgen. Somit kann die Kopplung bzw. Montage des Maschinenwellenendstückes und des Geberwellenendstückes mit dem Drehmomentübertragungselement einfacher erfolgen.

Durch die symmetrische Anordnung wird zudem eine verbesserte und strukturierte Kraftübertragung innerhalb der Wellenkupplung erzielt, so dass die einzelnen Elemente optimal hinsichtlich ihrer Aufgaben ausgebildet werden können. Über das Drehmomentübertragungselement kann auf diese Weise gezielt auf die Belastbarkeit hinsichtlich des Torsionsmomentes und der zu vermeidenden Querkräfte eingegangen werden.

In einer weiteren Ausführungsform der Erfindung weisen das Maschinenwellenendstück und/oder das Geberwellenendstück jeweils zwei klauenartige Elemente auf, welche zwischen den paarweise angeordneten stegförmigern Abstützelementen vorzugsweise spielfrei aufnehmbar sind.

Auf diese Weise kann bei einfacher Gestaltung des Maschinenwellenendstückes und/oder des Geberwellenendstückes eine optimale Kraftübertragung über das Drehmomentübertragungselement erfolgen.

Die klauenartigen Elemente des Maschinenwellenendstücks sind vorzugsweise zwischen dem dritten und vierten Paar stegförmiger Abstützelemente spielfrei gekoppelt. Die klauenartigen Elemente des Geberwellenendstücks sind vorzugsweise zwischen dem ersten und zweiten Paar stegförmiger Abstützelemente spielfrei gekoppelt.

Vorzugsweise weisen die klauenartigen Elemente Nuten auf, die für die stegförmigen Abstützelemente vorgesehen sind. Hierdurch kann die Montagesicherheit erhöht werden, ein Verrutschen der stegförmigen Abstutzelemente verhindert werden und/oder eine optimale Kraftübertragung bzw. Kraftkompensation, insbesondere hinsichtlich der Querkräfte, gewährleistet werden. Sofern es zu einem Verbiegen der stegförmigen Abstützelemente kommt, bleiben diese hinsichtlich der Kontaktstelle mit dem Geberwellenendstück bzw. Maschinenwellenendstück immer noch in der vorgesehenen Position.

In einer weiteren vorteilhaften Ausführungsform der Erfindung ist das Rahmenelement als Ring ausgebildet.

Auf diese Weise kann das durch die Maschinenwelle und/oder Geberwelle verursachte Torsionsmoment und die daraus resultierende Kraft optimal in dem Rahmenelement aufgenommen und weitergegeben werden. Die Ausgestaltung des Rahmenelements als Ring stellt eine äußerst stabile Form dar.

In einer weiteren vorteilhaften Ausgestaltung der Erfindung ist das Drehmomentübertragungselement mittels Presssitz mit dem Geberwellenendstück und/oder dem Maschinenwellenendstück verbindbar.

Durch eine Presspassung zwischen dem Drehmomentübertragungselementes und dem Geberwellenendstück und/oder dem Maschinenwellenendstück wird bei einer Kopplung der Elemente das Drehmomentübertragungselement und insbesondere das Rahmenelement unter Spannung gesetzt, so dass die Wellenkupplung vorgespannt ist und somit eine in sich stabile Einheit bildet.

In einer weiteren vorteilhaften Ausgestaltung der Erfindung ist das Rahmenelement derart gestaltet, dass eine Überschreitung des zu übertragenden Torsionsmomentes durch elastische Deformation des Rahmens kompensierbar ist.

In einer weiteren vorteilhaften Ausgestaltung der Erfindung sind die stegförmigen Abstützelemente derart gestaltet, dass durch einen radialen Versatz und/oder Winkelversatz der Maschinenwelle und/oder Geberwelle hervorgerufene Querkräfte durch elastische Deformation der stegförmigen Abstützelemente kompensierbar sind.

Durch die elastische Deformation des Drehmomentübertragungselementes können mechanische Schäden an den entsprechenden Lagern der Maschinenwelle und/oder Geberwelle sowie am Drehmomentübertragungselement vermieden werden. Sollte es zu einem Überschreiten des elastischen Bereichs der Elemente des Drehmomentübertragungselementes kommen, so wird vorzugsweise nur das Drehmomentübertragungselement zerstört. Auf diese weise muss lediglich das Drehmomentübertragungselement ausgetauscht werden.

In einer weiteren Ausführungsform der Erfindung ist eine elektrische Antriebseinheit mit einer Wellenkupplung nach einer der vorhergehenden Ausführungsformen, der elektrischen Maschine und dem Geber verbunden.

Die Erfindung ist nicht auf Wellenkupplungen mit nur einem Drehmomentübertragungselement begrenzt, es sind ebenso mehrere axial hintereinander angeordnete und ineinander greifende Drehmomentübertragungselemente vorstellbar. Dabei ist der Übergang zu den jeweiligen Wellenenden erfindungsgemäß ausgestaltet.

Im Folgenden wird die Erfindung anhand der in den Figuren dargestellten Ausführungsbeispiele näher beschrieben und erläutert. Es zeigen:
- FIG 1: Ein schematischer Aufbau einer aus dem Stand der Technik bekannten Oldham-Kupplung,
- FIG 2: ein schematischer Aufbau zweier Wellen zur Erläute- rung des radialen Versatzes,
- FIG 3: ein schematischer Aufbau zweier Wellen zur Erläute- rung eines Winkelversatzes,
- FIG 4: eine Ausgestaltung einer erfindungsgemäßen Wellen- kupplung mit einem Drehmomentübertragungselement,
- FIG 5: die Ausgestaltung einer erfindungsgemäßen Wellen- kupplung nach Figur 4 mit dem Drehmomentübertra- gungselement und dem aufgenommenen Maschinenwellen- endstück im gekoppelten Zustand und
- FIG 6: einen schematischen Aufbau einer elektrischen An- triebseinheit mit einer Wellenkupplung.

FIG 1 zeigt einen schematischen Aufbau einer aus dem Stand der Technik bekannten Oldham-Kupplung. Hierbei ist eine erste Nut 2 eines ersten Wellenendabschnittes 1 sowie eine zweite Nut 6 eines zweiten Wellenendabschnittes 7 hinsichtlich eines ersten Greifelements 3 und eines zweiten Greifelements 5 eines starren Drehmomentübertragungselements 4 mit einem Spiel ausgebildet, so dass bei einem radialen Versatz "K" das erste Greifelement 3 in der ersten Nut 2 gleiten kann und das zweite Greifelement 5 in der zweiten Nut 6 gleiten kann. Das erste Greifelement 3 sollte im Wesentlichen zu dem zweiten Greifelement 5 senkrecht ausgerichtet sein. Auf diese Weise wird bei Rotation einer Welle, welche mit dem ersten und zweiten Wellenendabschnitt 1, 7 verbunden ist, ein Radialversatz durch hin und her gleiten des Drehmomentübertragungselements 4 kompensiert. Nachteilig hierbei ist jedoch, dass durch das hin und her Gleiten ein starker mechanischer Verschleiß an dem ersten Greifelement 3 und dem zweiten Greifelement 5 sowie der ersten Nut 2 und der zweiten Nut 6 festzustellen ist. Liegt ein Winkelversatz an einer Oldham-Kupplung vor, so kann dieser nicht durch das starre Drehmomentübertragungselement 4 kompensiert werden und die Wellen des ersten Wellenendabschnittes 1 und zweiten Wellenendabschnittes 7 geben dies als Querkraft an die Lager der besagten Wellen weiter. Dies führt zu einem beschleunigten Verschleiß der Lager.

FIG 2 zeigt einen schematischen Aufbau zweier Wellen 10, 11 zur Erläuterung des radialen Versatzes. Hierbei weist eine erste Achse 8 einer ersten Welle 10 zu einer zweiten Achse 9 einer zweien Welle 11 einen Versatz mit einem Abstand "K" auf. Werden beide Wellen 10, 11 mit einem starren Drehmomentübertragungselement verbunden, so wird bei Rotation der ersten Welle 10 und der zweiten Welle 11 durch den Radialversatz bzw. den Versatz der ersten Achse 8 zur zweiten Achse 9 eine Querkraft im starren Drehmomentübertragungselement hervorgerufen. Diese Querkraft wird auf die Lager der ersten Welle 10 und der zweiten Welle 11 weitergegeben.

FIG 3 zeigt einen schematischen Aufbau zweier Wellen 10, 11 zur Erläuterung eines Winkelversatzes. Hierbei weist eine erste Achse 8 einer ersten Welle 10 zu einer zweiten Achse 9 einer zweien Welle 11 einen Winkelversatz mit dem Winkel "α" auf. Werden beide Wellen 10, 11 mit einem starren Drehmomentübertragungselement verbunden, so wird bei Rotation der ersten Welle 10 und der zweiten Welle 11 durch den Winkelversatz der ersten Achse 8 zur zweiten Achse 9 ein Biegemoment im starren Drehmomentübertragungselement hervorgerufen. Dieses Biegemoment wird bei einem starren Drehmomentübertragungselement als Querkraft auf die Lager der ersten Welle 10 und der zweiten Welle 11 weitergegeben.

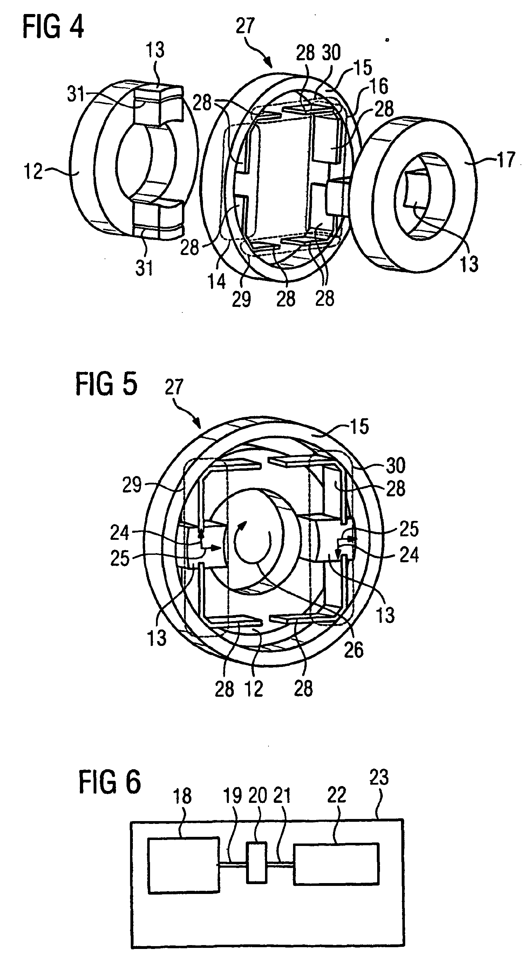

Figur 4 zeigt eine Ausgestaltung einer erfindungsgemäßen Wellenkupplung mit einem Drehmomentübertragungselement 27. Hierbei weist ein Maschinenwellenendstück 12 zwei klauenartige Elemente 13 auf. Gegenüberliegend befindet sich ein Geberwellenendstück 17 welches in diesem Ausführungsbeispiel eine gleiche Ausgestaltung wie das Maschinenwellenendstück 12 aufweist. Das Geberwellenendstück 17 ist hinsichtlich seiner Geberwellenachse um 90° gedreht, so dass die klauenartigen Elemente 13 um 90° versetzt zu den klauenartigen Elementen 13 des Maschinenwellenendstückes 12 stehen. Zwischen dem Maschinenwellenendstück 13 und dem Geberwellenendstück 17 befindet sich das Drehmomentübertragungselement 27. Dieses Drehmomentübertragungselement 27 besteht aus einem Rahmenelement 15 und an der Innenseite angebrachte stegförmige Abstützelemente 28. Dabei ist zwischen einem ersten Paar 14 stegförmiger Abstützelemente 28, einem zweiten Paar 16 stegförmiger Abstützelemente 28, einem dritten Paar 29 stegförmiger Abstützelemente 28 und einem vierten Paar 30 stegförmiger Abstützelemente 28 zu unterscheiden. Das erste Paar 14 und zweite Paar 16 stegförmiger Abstützelemente 28 dienen der Kontaktierung mit dem Geberwellenendabschnitt 17 bzw. den Klauen 13 des Geberwellenendabschnitts 17. Das dritte Paar 29 und vierte Paar 30 stegförmiger Abstützelemente 28 dienen der Kontaktierung mit dem Maschinenwellenendabschnitt 12 bzw. den Klauen 13 des Maschinenwellenendabschnitts 12. Hierbei sind die Längsachsen der stegförmigen Abstützelemente des ersten Paars 14 und zweiten Paars 16 senkrecht zu den Längsachsen des dritten Paars 29 und vierten Paars 30 angeordnet. Zwischen dem jeweiligen Paar 14, 16, 29, 30 stegförmiger Abstützelemente ist das jeweilige klauenartige Element 13 zu kontaktieren. In der Erfindung ist das klauenartige Element 13 und/oder die Länge der stegförmigen Abstützelemente 28 mit Übermaß ausgebildet, so dass es bei der Montage zu einer Vorspannung im Drehmomentübertragungselement 27 kommt. Vorteilhafterweise weisen die klauenartigen Elemente 13 Nuten 31 auf, in die die stegförmigen Abstützelemente 28 des Drehmomentübertragungselementes 27 greifen können. Auf diese Weise kann eine optimale und sichere Montage gewährleistet werden. Zudem wird die innere Stabilität des Drehmomentübertragungselementes 27 durch das Hinzufügen der Nuten 31 stark verbessert, da auf diese Weise ein Verrutschen der stegförmigen Abstützelemente 28 bei Auftreten von Querkräften 25 vermieden wird und somit die erwünschte Anordnung der stegförmigen Abstützelemente 28 zu den klauenartigen Elementen 13 gesichert werden kann.

Figur 5 zeigt die Ausgestaltung einer erfindungsgemäßen Wellenkupplung 20 nach Figur 4 mit dem Drehmomentübertragungselement 27 und dem aufgenommenen Maschinenwellenendstück 12 im gekoppelten Zustand. Die Figur 5 dient zur genaueren Visualisierung der unter Figur 4 gezeigten Wellenkupplung 20. Hierbei wird explizit die Koppelung des Drehmomentübertragungselementes 27 mit dem Maschinenwellenendstück 12 gezeigt, eine Koppelung des Geberwellenendstückes 17 mit dem Drehmomentübertragungselement 27 ist entsprechend auszubilden. Es ist ersichtlich, dass der durch ein Torsionsmoment 26 hervorgerufener Torsions-Kraftvektor 24 an der Kontaktstelle, zwischen dem klauenartigem Element 13, des Maschinenwellenendabschnitts 12, und dem dritten und vierten Paar 29, 30 stegförmiger Abstützelemente 28 parallel zu der Längsachse des dritten und vieren Paars 29, 30 stegförmiger Abstützelemente 28 wirkt. Der Torsions-Kraftvektor 24 wird somit direkt von der stabilen Seite des dritten und vierten Paars 29, 30 stegförmiger Abstützelemente 28 aufgenommen und an das Rahmenelement 15, welches in diesem Fall ringförmig ausgebildet ist, weitergegeben. In einer vorteilhaften Ausgestaltung weisen die klauenartigen Elemente 13 Nuten für die stegförmigen Abstützelemente 28 auf. In der Figur 5 ist ersichtlich, dass zwischen den klauenartigen Elementen 13 und dem Rahmenelement 14 Spiel ist, so das bei Auftreten von Querkräften 25 die klauenartigen Elemente 13 durch Deformation der stegförmigen Abstützelemente 28 ausweichen können, ohne unmittelbar an das Rahmenelement 15 zu stoßen. Auf diese Weise können auftretende Querkräfte 25 welche durch die geometrische Anordnung senkrecht zu der Längsachse der stegförmigen Abstützelemente 28 wirken durch Deformation kompensiert werden und somit nicht an die Lager der gekoppelten Wellen 19, 21 übertragen werden.

FIG 6 zeigt einen schematischen Aufbau einer elektrischen Antriebseinheit 23 mit einer Wellenkupplung 20. Ein Geber 22 wird über die Wellenkupplung 20 an eine elektrische Maschine 18 angeschlossen. Dabei wird eine Maschinenwelle 19 der elektrischen Maschine 18 über die Wellenkupplung 20 mit einer Geberwelle 21 des Gebers 22 verbunden.

## Patentansprüche

1. Wellenkupplung (20) zur Ankopplung eines Gebers (22), der eine Geberwelle (21) aufweist, an eine elektrische Maschine (18), die eine Maschinenwelle (19) aufweist, wobei die Wellenkupplung (20) umfasst:
- ein mit der Geberwelle (21) koppelbares Geberwellenendstück (17),
- ein mit der Maschinenwelle (19) koppelbares Maschinenwellenendstück (12) und
- ein Drehmomentübertragungselement (27) zur Kopplung des Geberwellenendstückes (17) mit dem Maschinenwellenendstück (12),
**dadurch gekennzeichnet, dass** das Drehmomentübertragungselement (27) ein Rahmenelement (15) und an der Innenseite angebrachte stegförmige Abstützelemente (28) aufweist, wobei die stegförmigen Abstützelemente (28) im zusammengebauten Zustand derartige Kontaktstellen des Geberwellenendstückes (17) und/oder des Maschinenwellenendstückes (12) mit dem Drehmomentübertragungselement (27) aufweisen, dass ein durch das Geberwellenendstück (17) und/oder Maschinenwellenendstück (12) hervorgerufener Torsions-Kraftvektor (24), der durch ein von der Maschinenwelle (19) an die Geberwelle (21) zu übertragendes Torsionsmoment (26) erzeugt wird, an jeder der besagten Kontaktstellen im Wesentlichen parallel zur Längsachse des zugehörigen stegförmigen Abstützelementes (28) wirkt.

2. Wellenkupplung nach Anspruch 1,
wobei das Drehmomentübertragungselement (27) einstückig ausgeführt ist.

3. Wellenkupplung nach Anspruch 1,
wobei das Rahmenelement (15) aus einem anderen Material als die stegförmigen Abstützelemente (28) besteht.

4. Wellenkupplung nach einem der vorhergehenden Ansprüche,
wobei erste Längsachsen eines ersten Paars (14) stegförmiger Abstützelemente (28), die zu einer Kontaktierung mit dem Geberwellenendstück (17) dienen, im Wesentlichen parallel zueinander stehen und vorzugsweise auf einer gemeinsamen Gerade liegen.

5. Wellenkupplung nach Anspruch 4,
wobei zweite Längsachsen eines zweiten Paars (16) stegförmiger Abstützelemente (28), die zu einer weiteren Kontaktierung mit dem Geberwellenendstück (17) dienen, im Wesentlichen parallel zueinander stehen und vorzugsweise auf einer gemeinsamen Gerade liegen.

6. Wellenkupplung nach Anspruch 5,
wobei die ersten Längsachsen im Wesentlichen parallel zu den zweiten Längsachsen stehen.

7. Wellenkupplung nach einem der Ansprüche 4 bis 6,
wobei dritte Längsachsen eines dritten Paars (29) stegförmiger Abstützelemente (28), die zu einer Kontaktierung mit dem Maschinenwellenendstück (12) dienen, im Wesentlichen parallel zueinander stehen und vorzugsweise auf einer gemeinsamen Gerade liegen.

8. Wellenkupplung nach Anspruch 7,
wobei vierte Längsachsen eines vierten Paars (30) stegförmiger Abstützelemente (28), die zu einer weiteren Kontaktierung mit dem Maschinenwellenendstück (12) dienen, im Wesentlichen parallel zueinander stehen und vorzugsweise auf einer gemeinsamen Gerade liegen.

9. Wellenkupplung nach Anspruch 8,
wobei die dritten Längsachsen im Wesentlichen parallel zu den vierten Längsachsen stehen.

10. Wellenkupplung nach einen der Ansprüche 7 bis 9,
wobei die ersten Längsachsen im Wesentlichen senkrecht zu den dritten Längsachsen stehen.

11. Wellenkupplung nach Anspruch 10,
wobei das Maschinenwellenendstück (12) und/oder das Geberwellenendstück (17) jeweils zwei klauenartige Elemente (13) aufweist, welche zwischen den paarweise angeordneten stegförmigern Abstützelementen (14, 16, 29, 30) vorzugsweise spielfrei aufnehmbar sind.

12. Wellenkupplung nach einem der vorhergehenden Ansprüche,
wobei das Rahmenelement (15) als Ring ausgebildet ist.

13. Wellenkupplung nach einem der vorhergehenden Ansprüche,
wobei das Drehmomentübertragungselement (27) mittels Presssitz mit dem Geberwellenendstück (17) und/oder dem Maschinenwellenendstück (12) verbindbar ist.

14. Wellenkupplung nach einem der vorhergehenden Ansprüche,
**dadurch gekennzeichnet, dass** das Rahmenelement (15) derart gestaltet ist, dass eine Überschreitung des zu übertragenden Torsionsmomentes (26) durch elastische Deformation des Rahmenelementes (15) kompensierbar ist.

15. Wellenkupplung nach einem der vorhergehenden Ansprüche,
**dadurch gekennzeichnet, dass** die stegförmigen Abstützelemente (28) derart gestaltet sind, dass durch einen radialen Versatz und/oder Winkelversatz der Maschinenwelle (19) und/oder Geberwelle (21) hervorgerufene Querkräfte (25) durch elastische Deformation der stegförmigen Abstützelemente (28) kompensierbar sind.

16. Elektrische Antriebseinheit mit einer Wellenkupplung nach einem der vorhergehenden Ansprüche, der elektrischen Maschine (18) und dem Geber (22).

17. Verfahren zur Ankopplung eines Gebers (22), der eine Geberwelle (21) aufweist, an eine elektrische Maschine (18), die eine Maschinenwelle (19) aufweist, mit folgenden Verfahrensschritten:
- Kopplung eines Geberwellenendstückes (17) mit der Geberwelle (21),
- Kopplung eines Maschinenwellenendstückes (12) mit der Maschinenwelle (19),
- Koppeln des Geberwellenendstückes (17) und des Maschinenwellenendstückes (12) mit einem Drehmomentübertragungselement (27) welches ein Rahmenelement (15) und an der Innenseite angebrachte stegförmige Abstützelemente (28) aufweist, wobei die stegförmigen Abstützelemente (28) nach dem Koppeln derartige Kontaktstellen des Geberwellenendstückes (17) und/oder des Maschinenwellenendstückes (12) mit dem Drehmomentübertragungselement (27) aufweisen, dass ein durch das Geberwellenendstück (17) und/oder Maschinenwellenendstück (12) hervorgerufener Torsions-Kraftvektor (24), der durch ein von der Maschinenwelle (19) an die Geberwelle (21) zu übertragendes Torsionsmoment (26) erzeugt wird, an jeder der besagten Kontaktstellen im Wesentlichen parallel zur Längsachse des zugehörigen stegförmigen Abstützelementes (28) wirkt.

## Claims

1. Shaft coupling (20) for coupling a transducer (22) which has a transducer shaft (21) to an electric machine (18) which has a machine shaft (19), the shaft coupling (20) comprising:
- a transducer shaft end piece (17) which can be coupled to the transducer shaft (21),
- a machine shaft end piece (12) which can be coupled to the machine shaft (19) and
- a torque transmission element (27) for coupling the transducer shaft end piece (17) to the machine shaft end piece,
**characterised in that** the torque transmission element (27) has a frame element (15) and rod-shaped support elements (28) attached to the inside, the rod-shaped support elements (28) having, in the assembled state, contact points between the transducer shaft end piece (17) and/or machine shaft end piece (12) and the torque transmission element (27), such that a torsional force vector (24) caused by the transducer shaft end piece (17) and/or the machine shaft end piece (12) and generated by a torsional moment (26) to be transmitted from the machine shaft (19) to the transducer shaft (21) acts at each of the said contact points essentially parallel to the longitudinal axis of the associated rod-shaped support element (28).

2. Shaft coupling according to claim 1,
the torque transmission element (27) being executed in one piece.

3. Shaft coupling according to claim 1,
the frame element (15) consisting of a material different from that of the road-shaped support elements (28).

4. Shaft coupling according to one of the preceding claims,
first longitudinal axes of a first pair (14) of rod-shaped support elements (28) which serve to effect contact with the transducer shaft end piece (17) lying essentially parallel to one another and preferably on a common straight line.

5. Shaft coupling according to claim 4,
second longitudinal axes of a second pair (16) of rod-shaped support elements (28) which serve to effect further contact with the transducer shaft end piece (17) lying essentially parallel to one another and preferably on a common straight line.

6. Shaft coupling according to claim 5,
the first longitudinal axes being essentially parallel to the second longitudinal axes.

7. Shaft coupling according to one of claims 4 to 6,
third longitudinal axes of a third pair (29) of rod-shaped support elements (28) which serve to effect contact with the machine shaft end piece (12) lying essentially parallel to one another and preferably on a common straight line.

8. Shaft coupling according to claim 7,
fourth longitudinal axes of a fourth pair (30) of rod-shaped support elements (28) which serve to effect further contact with the machine shaft end piece (12) lying essentially parallel to one another and preferably on a common straight line.

9. Shaft coupling according to claim 8,
the third longitudinal axes being essentially parallel to the fourth longitudinal axes.

10. Shaft coupling according to one of claims 7 to 9,
the first longitudinal axes being essentially parallel to the third longitudinal axes.

11. Shaft coupling according to claim 10,
the machine shaft end piece (12) and/or the transducer shaft end piece (17) each having two claw-like elements (13) which can be accommodated preferably without play between the rod-shaped support elements (14, 16, 29, 30) arranged in pairs.

12. Shaft coupling according to one of the preceding claims, the frame element (15) being designed as a ring.

13. Shaft coupling according to one of the preceding claims,
it being possible for the torque transmission element (27) to be connected to the transducer shaft end piece (17) and/or the machine shaft end piece (12) by force fit.

14. Shaft coupling according to one of the preceding claims,
**characterised in that** the frame element (15) is fashioned such that an overshoot in the torsional moment (26) to be transmitted can be compensated for by elastic deformation of the frame element (15).

15. Shaft coupling according to one of the preceding claims,
**characterised in that** the rod-shaped support elements (28) are fashioned such that transverse forces (25) caused by a radial displacement and/or angular displacement of the machine shaft (19) and/or transducer shaft (21) can be compensated for by elastic deformation of the rod-shaped support elements (28).

16. Electric drive unit with a shaft coupling according to one of the preceding claims, with the electric machine (18) and with the transducer (22).

17. Method for coupling a transducer (22) which has a transducer shaft (21) to an electric machine (18) which has a machine shaft (19), with the following method steps:
- coupling a transducer shaft end piece (17) to the transducer shaft (21),
- coupling a machine shaft end piece (12) to the machine shaft (19),
- coupling the transducer shaft end piece (17) and the machine shaft end piece (12) to a torque transmission element (27) which has a frame element (15) and rod-shaped support elements (28) attached to the inside, the rod-shaped support elements (28) having contact points between the transducer shaft end piece (17) and/or machine shaft end piece (12) and the torque transmission element (27) following coupling, such that a torsional force vector (24) caused by the transducer shaft end piece (17) and/or the machine shaft end piece (12) and generated by a torsional moment (26) to be transmitted from the machine shaft (19) to the transducer shaft (21) acts at each of the said contact points essentially parallel to the longitudinal axis of the associated rod-shaped support element (28).

## Revendications

1. Accouplement ( 20 ) d'arbre pour l'accouplement d'un capteur ( 22 ) qui, comporte un arbre ( 21 ) de capteur, à un moteur ( 18 ) électrique, qui comporte un arbre ( 19 ) de moteur, l'accouplement ( 20 ) d'arbre comprenant :
- un embout ( 17 ) de l'arbre du capteur pouvant être accouplé à l'arbre ( 21 ) du capteur,
- un embout ( 12 ) de l'arbre du moteur pouvant être accouplé à l'arbre ( 19 ) du moteur, et
- un élément ( 27 ) de transmission de couple pour l'accouplement de l'embout ( 17 ) de l'arbre du capteur à l'embout ( 12 ) de l'arbre du moteur,
**caractérisé en ce que**
l'élément ( 27 ) de transmission de couple comporte un élément ( 15 ) formant cadre et des éléments ( 28 ) en forme de réglette appliqués au côté intérieur, les éléments ( 28 ) d'appui en forme de réglette ayant à l'état monté des points de contact de l'embout ( 17 ) de l'arbre du capteur et/ou de l'embout ( 12 ) de l'arbre du moteur avec l'élément ( 27 ) de transmission de couple tels qu'un vecteur ( 24 ) de force de torsion provoqué par l'embout ( 17 ) de l'arbre du capteur et/ou l'embout ( 12 ) de l'arbre du moteur, qui est produit par un couple ( 26 ) de torsion à transmettre de l'arbre ( 19 ) du moteur à l'arbre ( 21 ) du capteur, agisse en chacun des- dits points de contact sensiblement parallèlement à l'axe longitudinal de l'élément ( 28 ) d'appui en forme de réglette associé.

2. Accouplement d'arbre suivant la revendication 1, dans lequel l'élément ( 27 ) de transmission de couple est réalisé d'une seule pièce.

3. Accouplement d'arbre suivant la revendication 1, dans lequel l'élément ( 15 ) formant cadre est en un matériau autre que les éléments ( 28 ) d'appui en forme de réglette.

4. Accouplement suivant l'une des revendications précédentes, dans lequel des premiers axes longitudinaux d'une première paire ( 14 ) d'éléments ( 28 ) d'appui en forme de réglette, qui servent à une mise en contact avec l'embout ( 17 ) de l'arbre du capteur, sont sensiblement parallèles l'un à l'autre et se trouvent de préférence sur une droite commune.

5. Accouplement d'arbre suivant la revendication 4, dans lequel des deuxièmes axes longitudinaux d'une deuxième paire ( 16 ) d'éléments ( 28 ) d'appui en forme de réglette, qui servent à une autre mise en contact avec l'embout ( 17 ) de l'arbre du capteur, sont sensiblement parallèles entre eux et se trouvent de préférence sur une droite commune.

6. Accouplement d'arbre suivant la revendication 5, dans lequel les premiers axes longitudinaux sont sensiblement parallèles aux deuxièmes axes longitudinaux.

7. Accouplement suivant l'une des revendications 4 à 6, dans lequel des troisièmes axes longitudinaux d'une troisième paire ( 29 ) d'éléments ( 28 ) en forme de réglette, qui servent à une mise en contact avec l'embout ( 12 ) de l'arbre de la machine, sont sensiblement parallèles entre eux et se trouvent de préférence sur une droite commune.

8. Accouplement d'arbre suivant la revendication 7, dans lequel des quatrièmes axes longitudinaux d'une quatrième paire ( 30 ) d'éléments ( 28 ) d'appui en forme de réglette, qui servent à une autre mise en contact avec l'embout ( 12 ) de l'arbre du moteur, sont sensiblement parallèles entre eux et se trouvent de préférence sur une droite commune.

9. Accouplement d'arbre suivant la revendication 8, dans lequel les troisièmes axes longitudinaux sont sensiblement parallèles aux quatrièmes axes longitudinaux.

10. Accouplement suivant l'une des revendications 7 à 9, dans lequel les premiers axes longitudinaux sont sensiblement perpendiculaires aux troisièmes axes longitudinaux.

11. Accouplement d'arbre suivant la revendication 10, dans lequel l'embout ( 12 ) de l'arbre du moteur et/ou l'embout ( 17 ) de l'arbre du capteur ont respectivement deux éléments ( 13 ) de type à griffe, qui peuvent être reçus de préférence sans jeu entre les éléments ( 14, 16, 29, 30 ) d'appui en forme de réglette disposée par paire.

12. Accouplement suivant l'une des revendications précédentes, dans lequel l'élément ( 15 ) formant cadre est constitué en anneau.

13. Accouplement suivant l'une des revendications précédentes, dans lequel l'élément ( 27 ) de transmission de couple peut être relié à l'embout ( 17 ) de l'arbre du capteur et/ou à l'embout ( 12 ) de l'arbre du moteur au moyen d'un ajustement serré.

14. Accouplement suivant l'une des revendications précédentes, **caractérisé en ce que** l'élément ( 15 ) formant cadre est conformé de manière à pouvoir compenser un dépassement du couple ( 26 ) de torsion à transmettre par une déformation élastique de l'élément ( 15 ) formant cadre.

15. Accouplement suivant l'une des revendications précédentes, **caractérisé en ce que** les éléments ( 28 ) d'appui en forme de réglette sont conformés de manière à pouvoir compenser par une déformation élastique des éléments ( 28 ) d'appui en forme de réglette des forces ( 25 ) transversales provoquées par un décalage radial et/ou par un décalage angulaire de l'arbre ( 19 ) du moteur et/ou de l'arbre ( 21 ) du capteur.

16. Groupe d'entraînement électrique comprenant un accouplement d'arbre suivant l'une des revendications précédentes, le moteur ( 18 ) électrique et le capteur ( 22 ).

17. Procédé d'accouplement d'un capteur ( 22 ), qui comporte un arbre ( 21 ) de capteur, à un moteur ( 18 ) électrique, qui comporte un arbre ( 19 ) de moteur, comportant les stades de procédé suivant :
- on accouple un embout ( 17 ) de l'arbre du capteur à l'arbre ( 21 ) du capteur,
- on accouple un embout ( 12 ) de l'arbre du moteur à l'arbre ( 19 ) du moteur,
- on accouple l'embout ( 17 ) de l'arbre du capteur et l'embout ( 12 ) de l'arbre du moteur à un élément ( 27 ) de transmission de couple qui comporte un élément ( 15 ) formant cadre et des éléments ( 28 ) d'appui en forme de réglette appliqués au côté intérieur, les éléments ( 28 ) d'appui en forme de réglette ayant après l'accouplement des points de contact de l'embout ( 17 ) de l'arbre du capteur et/ou de l'embout ( 12 ) de l'arbre du moteur avec l'élément ( 27 ) de transmission de couple tels qu'un vecteur ( 24 ) de force de torsion provoqué par l'embout ( 17 ) de l'arbre du capteur et/ou l'embout ( 12 ) de l'arbre du moteur, qui est produit par un couple ( 26 ) de torsion à transmettre de l'arbre ( 19 ) du moteur à l'arbre ( 21 ) du capteur, agisse en chacun des-dits points de contact sensiblement parallèlement à l'axe longitudinal de l'élément ( 28 ) d'appui en forme de réglette associé.
